# EUROPÄISCHE PATENTSCHRIFT

(11) **EP 3 956 139 B1**
(45) Veröffentlichungstag und Bekanntmachung des Hinweises auf die Patenterteilung: **13.03.2024**
(21) Anmeldenummer: 20712577.4
(22) Anmeldetag: 24.03.2020
(51) Int. Cl.: B32B 17/10

(54) **VERGLASUNGSEINHEIT UND FAHRZEUG MIT EINER SOLCHEN**
GLAZING UNIT AND VEHICLE WITH SAME
UNITÉ DE VITRAGE ET VÉHICULE DOTÉ D'UNE TELLE UNITÉ

(30) Priorität: 16.04.2019 EP 19169367
(43) Veröffentlichungstag der Anmeldung: 23.02.2022
(73) Patentinhaber: Saint-Gobain Glass France, 92400 Courbevoie (FR)
(72) Erfinder: ARENDT, Sebastian, 52146 Würselen (DE); ZHANG, Huixing, 52064 Aachen (DE); DO ROSARIO, Jefferson, 52064 Aachen (DE)
(74) Vertreter: Gebauer, Dieter Edmund
(86) Internationale Anmeldenummer: PCT/EP2020/058054
(87) Internationale Veröffentlichungsnummer: WO 2020/212094

(56) Entgegenhaltungen:
- WO-A1-2011/086554
- WO-A1-2012/079159
- WO-A1-2015/118242
- WO-A2-2004/016897
- US-A- 6 039 390

## Beschreibung

Die Erfindung betrifft eine Verglasungseinheit, die zwei Glas- oder Polymerscheiben und mindestens eine zwischen diese eingeklebte Polymerfolie oder ein FolienLaminat und eine zwischen den Scheiben angeordnete elektronische Funktionseinheit aufweist.

Elektrooptische Funktionselemente mit elektrisch steuerbaren optischen Eigenschaften sind seit langem in großer Vielgestaltigkeit bekannt und werden in der industriellen Massenproduktion, beispielsweise in TV-Geräten, Laptops, Mobiltelefonen/Smartphones und Tablets, eingesetzt.

Auch Verglasungseinheiten mit elektrisch steuerbaren Funktionselementen sind als solche bekannt. Die optischen Eigenschaften der Funktionselemente können durch eine angelegte elektrische Spannung verändert werden. Ein Beispiel für solche Funktionselemente sind SPD-Funktionselemente (suspended particle device), die beispielsweise aus EP 0876608 B1 und WO 2011033313 A1 bekannt sind. Durch die angelegte Spannung lässt sich die Transmission von sichtbarem Licht durch SPD-Funktionselemente steuern. Ein weiteres Beispiel sind PDLC-Funktionselemente (polymer dispersed liquid crystal), die beispielsweise aus DE 102008026339 A1 bekannt sind. Die aktive Schicht enthält dabei Flüssigkristalle, welche in eine Polymermatrix eingelagert sind. Wird keine Spannung angelegt, so sind die Flüssigkristalle ungeordnet ausgerichtet, was zu einer starken Streuung des durch die aktive Schicht tretenden Lichts führt. Wird an die Flächenelektroden eine Spannung angelegt, so richten sich die Flüssigkristalle in einer gemeinsamen Richtung aus und die Transmission von Licht durch die aktive Schicht wird erhöht.

Es wurden Windschutzscheiben vorgeschlagen, bei denen durch ein solches Funktionselement eine elektrisch steuerbare Sonnenblende realisiert ist, um die herkömmliche mechanisch klappbare Sonnenblende in Kraftfahrzeugen zu ersetzen. Windschutzscheiben mit elektrisch steuerbaren Sonnenblenden und Verdunklungseinheiten sind beispielsweise bekannt aus DE 102013001334 A1, DE 102005049081 B3, DE 102005007427 A1, DE202018005876 U1 und DE 102007027296 A1.

SPD- und PDLC-Funktionselemente sind als Mehrschichtfolie kommerziell erhältlich, wobei die aktive Schicht und die zum Anlegen einer Spannung erforderlichen Flächenelektroden zwischen zwei Trägerfolien, typischerweise aus PET, angeordnet sind. Bei der Herstellung der Verglasungseinheit wird das Funktionselement in der gewünschten Größe und Form aus der Mehrschichtfolie ausgeschnitten und zwischen die Folien einer Zwischenschicht eingelegt, mittels derer zwei Glasscheiben miteinander zur Verglasungseinheit laminiert werden.

Es versteht sich, dass an Verglasungseinheiten, die zur Erhöhung des Komforts elektrooptische Funktionselemente enthalten und die in Fahrzeugen eingesetzt werden, die gleichen Sicherheitsanforderungen zu stellen sind wie an herkömmliche Fahrzeugscheiben. Insbesondere sollen bei einem Unfall, bei dem die Verglasungseinheit und/oder die Verbindung zur Ansteuereinheit im Fahrzeug unterbrochen wird, keine Gefahren für die Insassen entstehen, und erforderliche Rettungsarbeiten sollen nicht durch Eigenheiten der Verglasungseinheit behindert werden. In einem allgemeineren Sinne besteht die Aufgabe darin, im erwähnten Fall einer Unterbrechung der Verbindung zur Ansteuereinheit gleichwohl gewisse Funktionen der elektrooptischen Funktionseinheit in der Verglasung aufrechtzuerhalten.

Eine Verglasungseinheit umfassend zwei Glasscheiben und eine dazwischenliegende Polymerschicht mit einer integrierten Antenne und / oder einer Schaltung, ist zum Beispiel in der WO 2011086554 A1 beschrieben. Aus der WO 2004016897 A2 ist eine beleuchtete Verglasungseinheit bekannt, die über eine Batterie mit Strom versorgt wird. In der US 20160085131 A1 ist eine Verglasungseinheit mit schaltbaren optischen Eigenschaften und einer Stromversorgung offenbart. WO 2012/079159 A1 offenbart eine Verglasungseinheit, die zwei Glasscheiben und eine zwischen diese eingeklebte Polymerfolie, sowie eine zwischen den Scheiben angeordnete elektronische Funktionseinheit aufweist, wobei zwischen den Scheiben und mit elektrischer Verbindung zur elektronischen Funktionseinheit zur mindestens teilweisen und mindestens temporären Stromversorgung derselben eine Stromquelle eingefügt ist, die mindestens einen Bereich der Verglasungseinheit von einem transparenten in einen opaken Zustand und umgekehrt schaltet, und wobei die Stromquelle derart konfiguriert und über einen extern betätigbaren ansprechenden Schalter mit der elektronischen Funktionseinheit verbunden ist, dass sie im Ein-Zustand des Schalters den durch die elektronische Funktionseinheit beeinflussten Bereich der Verglasungseinheit transparent macht. WO 2015/118242 A1 offenbart, dass in die Verglasungseinheit zwischen den Scheiben und mit elektrischer Verbindung zur elektronischen Funktionseinheit zur mindestens teilweisen und mindestens temporären Stromversorgung derselben eine Batterie eingefügt ist.

Diese Aufgabe wird durch eine Verglasungseinheit mit den Merkmalen des Anspruchs 1 gelöst. Zweckmäßige Fortbildungen des Erfindungsgedankens sind Gegenstand der abhängigen Ansprüche.

Die Erfindung schließt den Gedanken ein, eine ein elektrooptisches Funktionselement umfassende Verglasungseinheit mit einer integrierten Stromversorgung auszustatten, die die elektronische Funktionseinheit mindestens teilweise und mindestens temporär insoweit mit Strom versorgt, als dies zur begrenzten Aufrechterhaltung gewisser Funktionen erforderlich ist. Weiterhin schließt die Erfindung den Gedanken ein, hierzu zwischen die Scheiben der Verglasungseinheit eine Batterie einzufügen, deren Dicke höchstens gleich der Dicke der Polymerfolie oder des Folien-Laminats ist. Die Polymerfolie oder das Folienlaminat dienen als Zwischenschicht zur Verbindung der zwei Scheiben der Verglasungseinheit, das heißt die zwei Scheiben sind über die Polymerfolie oder das Folienlaminat miteinander verbunden.

Dies ermöglicht unter Beibehaltung der bewährten Konstruktion und etablierten Technologien zur Herstellung derartiger Verglasungseinheiten und somit ohne wesentliche Kostensteigerungen und ohne Einschränkungen des Gebrauchswerts und der optischen Qualität die Integration einer "Notstromversorgung", welche insgesamt den Gebrauchswert der Verglasungseinheit deutlich steigert und insbesondere zur Erfüllung von Sicherheitsanforderungen entscheidend beitragen kann.

Die erfindungsgemäße Verglasungseinheit umfasst mindestens eine Außenscheibe und eine Innenscheibe, die über eine Zwischenschicht miteinander verbunden sind. Die Verglasungseinheit ist dafür vorgesehen, in einer Fensteröffnung beispielsweise eines Fahrzeugs, eines Gebäudes oder eines Raums, den Innenraum gegenüber der äußeren Umgebung abzutrennen. Mit Innenscheibe wird im Sinne der Erfindung die dem Innenraum zugewandte Scheibe bezeichnet. Mit Außenscheibe wird die der äußeren Umgebung zugewandte Scheibe bezeichnet. Die thermoplastische Zwischenschicht dient der Verbindung der beiden Scheiben, wie es bei Verglasungseinheiten üblich ist.

Die Außenscheibe und die Innenscheibe sind bevorzugt aus Glas gefertigt. Grundsätzlich können sie aber auch aus Kunststoff bestehen. Bevorzugt handelt es sich bei den Kunststoffscheiben um Polykarbonatscheiben. Alternativ bevorzugt handelt es sich um Polymethylmethacrylat (PMMA)-Scheiben. Die Dicke der Außenscheibe und der Innenscheibe kann breit variieren und so den Erfordernissen im Einzelfall angepasst werden. Die Außenscheibe und die Innenscheibe weisen bevorzugt Dicken von 0,5 mm bis 5 mm auf, besonders bevorzugt von 1 mm bis 3 mm. Die Scheiben können klar sein, oder auch getönt oder gefärbt, solange die Windschutzscheibe im zentralen Sichtbereich eine ausreichende Lichttransmission aufweist, bevorzugt mindestens 70 % im Haupt-Durchsichtbereich A gemäß ECE-R43.

Die Außenscheibe, die Innenscheibe und/oder die Zwischenschicht können weitere geeignete, an sich bekannte Beschichtungen aufweisen, beispielsweise Antireflexbeschichtungen, Antihaftbeschichtungen, Antikratzbeschichtungen, photokatalytische Beschichtungen oder Sonnenschutzbeschichtungen oder Low-E-Beschichtungen.

Die erfindungsgemäße Verglasungseinheit enthält ein elektrooptisches Funktionselement mit elektrisch steuerbaren optischen Eigenschaften, das in die Zwischenschicht eingelagert ist. Das Funktionselement ist typischerweise zwischen mindestens zwei Schichten von thermoplastischem Material der Zwischenschicht angeordnet, wobei es durch die erste Schicht mit der Außenscheibe und durch die zweite Schicht mit der Innenscheibe verbunden ist.

Das Funktionselement umfasst mindestens eine aktive Schicht, die zwischen einer ersten Trägerfolie und einer zweiten Trägerfolie angeordnet ist. Die aktive Schicht weist die veränderlichen optischen Eigenschaften auf, die durch eine an die aktive Schicht angelegte elektrische Spannung gesteuert werden können. Unter elektrisch steuerbaren optischen Eigenschaften werden im Sinne der Erfindung solche Eigenschaften verstanden, die stufenlos steuerbar sind, aber gleichermaßen auch solche, die zwischen zwei oder mehr diskreten Zuständen geschaltet werden können. Die besagten optischen Eigenschaften betreffen insbesondere die Lichttransmission und/oder das Streuverhalten. Das Funktionselement umfasst außerdem Flächenelektroden zum Anlegen der Spannung an die aktive Schicht, die bevorzugt zwischen den Trägerfolien und der aktiven Schicht angeordnet sind.

In einer bevorzugten Ausgestaltung ist das Funktionselement ein PDLC-Funktionselement. Die aktive Schicht eines PDLC-Funktionselements enthält Flüssigkristalle, welche in eine Polymermatrix eingelagert sind. In einer weiteren bevorzugten Ausgestaltung ist das Funktionselement ein SPD-Funktionselement. Dabei enthält die aktive Schicht suspendierte Partikel, wobei die Absorption von Licht durch die aktive Schicht mittels Anlegen einer Spannung an die Flächenelektroden veränderbar ist. Grundsätzlich ist es aber auch möglich, andere Arten von regelbaren Funktionselementen einzusetzen, beispielweise elektrochrome Funktionselemente. Die erwähnten steuerbaren Funktionselemente und deren Funktionsweise sind dem Fachmann an sich bekannt, so dass an dieser Stelle auf eine ausführliche Beschreibung verzichtet werden kann.

Die Flächenelektroden und die aktive Schicht sind typischerweise im Wesentlichen parallel zu den Oberflächen der Außenscheibe und der Innenscheibe angeordnet. Die Flächenelektroden sind mit einer externen Spannungsquelle auf an sich bekannte Art elektrisch verbunden. Die elektrische Kontaktierung, ebenso wie der Anschluss an die Energiequelle ist durch geeignete Verbindungskabel, beispielsweise Folienleiter realisiert. Die Verbindungskabel sind entweder direkt oder indirekt mit den Flächenelektroden verbunden. Die Verbindungskabel sind bevorzugt über sogenannte Sammelleiter (bus bars), beispielsweise Streifen eines elektrisch leitfähigen Materials oder elektrisch leitfähige Aufdrucke, mit den Flächenelektroden verbunden. Die Dicke des Funktionselements beträgt beispielsweise von 0,4 mm bis 1 mm.

Die Flächenelektroden sind bevorzugt als transparente, elektrisch leitfähige Schichten ausgestaltet. Die Flächenelektroden enthalten bevorzugt zumindest ein Metall, eine Metalllegierung oder ein transparentes leitfähiges Oxid (transparent conducting oxide, TCO). Die Flächenelektroden können beispielsweise Silber, Gold, Kupfer, Nickel, Chrom, Wolfram, Indium-Zinnoxid (ITO), Gallium-dotiertes oder Aluminium-dotiertes Zinkoxid und / oder Fluor-dotiertes oder Antimon-dotiertes Zinnoxid enthalten. Die Flächenelektroden weisen bevorzugt eine Dicke von 10 nm bis 2 µm auf, besonders bevorzugt von 20 nm bis 1 µm, ganz besonders bevorzugt von 30 nm bis 500 nm.

Das Funktionselement liegt insbesondere als Mehrschichtfolie mit zwei äußeren Trägerfolien vor. Bei einer solchen Mehrschichtfolie sind die Flächenelektroden und die aktive Schicht typischerweise zwischen den beiden Trägerfolien angeordnet. Mit äußerer Trägerfolie ist hier gemeint, dass die Trägerfolien die beiden Oberflächen der Mehrschichtfolie ausbilden. Das Funktionselement kann dadurch als laminierte Folie bereitgestellt werden, die vorteilhaft verarbeitet werden kann. Das Funktionselement ist durch die Trägerfolien vorteilhaft vor Beschädigung, insbesondere Korrosion geschützt. In einer Ausgestaltung ist die dünne Batterie ebenfalls in das Laminat eingebettet, so dass bei der Herstellung der Verglasungseinheit lediglich eine einzige vorgefertigte Komponente aus Funktionseinheit und "Notstromversorgung" bereitgestellt und verarbeitet werden muss.

In einer aus heutiger Sicht bevorzugten Ausführung ist die eingebettete Batterie eine Lithium-Feststoffbatterie (LCB), insbesondere eine flexible folienartige Batterie dieses Typs (FLCB). Grundsätzlich kommen für die Ausführung der Erfindung aber auch andere Batterietypen in Betracht, sofern diese mit einer Dicke bereitgestellt werden können, die nicht größer als die Dicke der Zwischenschicht der Verglasungseinheit ist.

Erfindungsgemäß ist die elektronische Funktionseinheit eine solche, die mindestens einen Bereich der Verglasungseinheit von einem transparenten in einen opaken Zustand und umgekehrt schaltet. Hierbei ist die Batterie derart konfiguriert und über einen auf eine Unterbrechung der Verbindung zwischen der elektronischen Funktionseinheit und einer Ansteuereinheit derselben ansprechenden Schalter mit der Funktionseinheit verbunden, dass sie im Ein-Zustand des Schalters den durch die Funktionseinheit beeinflussten Bereich der Verglasungseinheit transparent macht.

Bei den erwähnten Ausführungen kann der Schalter insbesondere ein sog. Reed-Schalter sein, der über einen in seine Nähe gehaltenen Magneten berührungslos extern betätigt werden kann. Diese Variante der genannten Ausführung ist insbesondere für Windschutzscheiben von Straßenfahrzeugen, speziell PKWs, sinnvoll, um es Rettungskräften zu ermöglichen, eine bei einem Unfall undurchsichtig gewordene Windschutzscheibe wieder durchsichtig zu machen und einen Einblick in das Fahrzeuginnere zu bekommen.

Grundsätzlich kann der erwähnte Schalter zur Herstellung einer Verbindung zwischen der elektronischen Funktionseinheit und der Batterie aber auch von einem anderen Typ sein, etwa als elektronisches Schaltelement ausgebildet sein, welches ein Eingangssignal von der Ansteuereinheit des Funktionselementes erhält, sobald deren Verbindung zum Funktionselement unterbrochen ist.

In Ausführungen der Erfindung ist die Dicke der Polymerfolie oder des Folien-Laminats, sowie der elektronischen Funktionseinheit und der Batterie, kleiner als 1,2 mm, insbesondere im Bereich zwischen 0,5 mm und 1,0 mm.

Weiterhin ist aus derzeitiger Sicht bevorzugt, dass die elektronische Funktionseinheit als PDLC-Einheit mit Sonnenblenden-Funktion ausgebildet ist. Darüber hinaus ist die Erfindung aber auch mit elektronischen Funktionselementen auf anderer Basis, etwa in weiter oben erwähnten SPD-Funktionselementen, oder auch in Verbindung mit in die Verglasungseinheit eingebetteten optoelektronischen oder anderen Sensoren, möglich.

Als besonders vorteilhaft stellt sich die Erfindung, wie bereits angemerkt, bei der Frontscheibe oder Heckscheibe oder Dachverglasung oder Seitenscheibe eines Fahrzeugs, insbesondere PKW, dar. Besonders bevorzugt ist dabei die elektronische Funktionseinheit als vollständig vorgefertigtes Funktionsmodul zusammen mit der Batterie in einem Ausschnitt der Polymerfolie oder des Folien-Laminats eingefügt. Die Batterie kann hierbei durchaus an anderer Stelle als das elektronische Funktionselement selbst platziert sein, um etwa Beeinträchtigungen des Sichtfeldes durch die undurchsichtige Batterie zu vermeiden. Speziell kann die Batterie in der Frontscheibe oder Heckscheibe oder Dachverglasung an oder nahe einer Kante derselben platziert sein.

In einer besonders vorteilhaften Ausgestaltung ist die Verglasungseinheit die Windschutzscheibe eines Kraftfahrzeugs, insbesondere eines Personenkraftwagens, mit einer elektrisch steuerbaren Sonnenblende, die durch das Funktionselement realisiert ist.

Die Windschutzscheibe weist eine Oberkante und eine Unterkante, sowie zwei zwischen Oberkante und Unterkante verlaufende Seitenkanten auf. Mit Oberkante wird diejenige Kante bezeichnet, welche dafür vorgesehen ist, in Einbaulage nach oben zu weisen. Mit Unterkante wird diejenige Kante bezeichnet, welche dafür vorgesehen ist, in Einbaulage nach unten zu weisen. Die Oberkante wird häufig auch als Dachkante und die Unterkante als Motorkante bezeichnet. Die Kanten des Funktionselements werden entsprechend der Einbaulage der Windschutzscheibe bezeichnet. Die Unterkante des Funktionselements ist also diejenige seiner Seitenkanten, die von der Oberkante der Windschutzscheibe abgewandt ist und zum zentralen Sichtfeld weist. Die Oberkante des Funktionselements ist der Oberkante der Windschutzscheibe zugewandt. Die seitlichen Kanten verlaufen zwischen Oberkante und Unterkante.

Windschutzscheiben weisen ein zentrales Sichtfeld auf, an dessen optische Qualität hohe Anforderungen gestellt werden. Das zentrale Sichtfeld muss eine hohe Lichttransmission aufweisen (typischerweise größer als 70%). Das besagte zentrale Sichtfeld ist insbesondere dasjenige Sichtfeld, das vom Fachmann als Sichtfeld B, Sichtbereich B oder Zone B bezeichnet wird. Das Sichtfeld B und seine technischen Anforderungen sind in der Regelung Nr. 43 der Wirtschaftskommission der Vereinten Nationen für Europa (UN/ECE) (ECE-R43, "Einheitliche Bedingungen für die Genehmigung der Sicherheitsverglasungswerkstoffe und ihres Einbaus in Fahrzeuge") festgelegt. Dort ist das Sichtfeld B in Anhang 18 definiert.

Das Funktionselement ist dabei oberhalb des zentralen Sichtfelds (Sichtfeld B) angeordnet. Das bedeutet, dass das Funktionselement im Bereich zwischen dem zentralen Sichtfeld und der Oberkante der Windschutzscheibe angeordnet ist. Das Funktionselement muss nicht den gesamten Bereich abdecken, ist aber vollständig innerhalb dieses Bereichs positioniert und ragt nicht in das zentrale Sichtfeld hinein. Anders ausgedrückt weist das Funktionselement einen geringeren Abstand zur Oberkante der Windschutzscheibe auf als der zentrale Sichtbereich. Somit wird die Transmission des zentralen Sichtfelds nicht durch das Funktionselement beeinträchtigt, welches an einer ähnlichen Stelle positioniert ist wie eine klassische mechanische Sonnenblende im heruntergeklappten Zustand.

In einer bevorzugten Ausgestaltung sind die Unterkanten des Funktionselements und des getönten Bereichs der thermoplastischen Schicht an die Form der Oberkante der Windschutzscheibe angepasst, was ein optisch ansprechenderes Erscheinungsbild bewirkt. Da die Oberkante einer Windschutzscheibe typischerweise gebogen ist, insbesondere konkav gebogen, ist auch die Unterkante des Funktionselements und des getönten Bereichs bevorzugt gebogen ausgestalten. Besonders bevorzugt sind die Unterkanten des Funktionselements im Wesentlichen parallel zur Oberkante der Windschutzscheibe ausgebildet. Es ist aber auch möglich, die Sonnenblende aus zwei jeweils geraden Hälften aufzubauen, die in einem Winkel zueinander angeordnet sind und der Form der Oberkante v-förmig angenähert sind.

Die Oberkante und die Seitenkanten des Funktionselements werden in Durchsicht durch die Windschutzscheibe bevorzugt von einem opaken Abdeckdruck verdeckt. Windschutzscheiben weisen typischerweise einen umlaufenden peripheren Abdeckdruck aus einer opaken Emaille auf, der insbesondere dazu dient, den zum Einbau der Windschutzscheibe verwendeten Kleber vor UV-Strahlung zu schützen und optisch zu verdecken. Dieser periphere Abdeckdruck wird bevorzugt dazu verwendet, auch die Oberkante und die Seitenkante des Funktionselements zu verdecken, sowie die erforderlichen elektrischen Anschlüsse. Die Sonnenblende ist dann vorteilhaft ins Erscheinungsbild der Windschutzscheibe integriert und lediglich die Unterkante ist potentiell vom Betrachter zu erkennen. Bevorzugt weisen sowohl die Außenscheibe als auch die Innenscheibe einen Abdeckdruck auf, so dass die Durchsicht von beiden Seiten gehindert wird.

Die erfindungsgemäß vorgesehene Einbettung einer Batterie als "Notstromversorgung" in eine gemäß den obigen Aspekten gestaltete Windschutzscheibe eines PKW hat den geltenden Normen und Entwurfsregeln zu entsprechen. In vorteilhafter Weise kann die Batterie dann nahe der Oberkante der Windschutzscheibe und speziell in einem weitgehend undurchsichtig beschichteten Randbereich oder Mittenbereich, in dem ein Befestigungselement zur Anbringung des Innenspiegels platziert ist, untergebracht sein. Sie liegt dann z.B. in unmittelbarer Nähe zu einem PDLC-Funktionselement mit Sonnenblenden-Funktion, so dass eine sehr kurze Leitungsverbindung hierzu realisiert werden kann.

Die Erfindung wird anhand von Figuren und Ausführungsbeispielen näher erläutert. Die Figuren sind schematische Darstellungen und nicht maßstabsgetreu. Die Figuren schränken die Erfindung in keiner Weise ein. Es zeigen:
- Fig. 1: eine Draufsicht auf eine erste Ausgestaltung der erfindungsgemäßen Verbundscheibe als Windschutzscheibe mit elektrisch steuerbarer Sonnenblende,
- Fig. 2: einen Querschnitt durch die Windschutzscheibe aus Figur 1,
- Fig. 3: eine vergrößerte Darstellung des Bereichs Z aus Figur 2,
- Fig. 4: eine Prinzipskizze einer weiteren Ausführung der Erfindung.

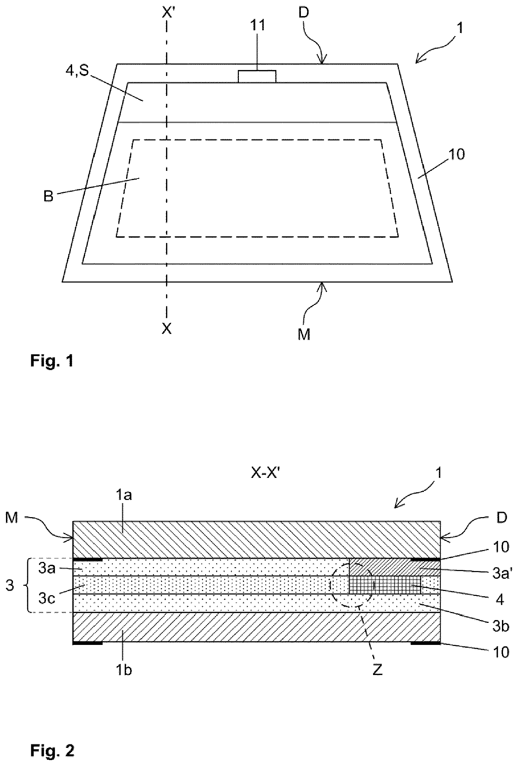

Fig. 1, Fig. 2 und Fig. 3 zeigen je ein Detail einer Windschutzscheibe 1 mit elektrisch steuerbarer Sonnenblende S einer bevorzugten Ausgestaltung der erfindungsgemäßen Verbundscheibe mit elektrisch steuerbaren optischen Eigenschaften. Die Windschutzscheibe 1 umfasst eine Außenscheibe 1a und eine Innenscheibe 1b, die über eine Zwischenschicht 3 miteinander verbunden sind. Die Außenscheibe 1a weist eine Dicke von 2,1 mm auf und besteht aus einem grün eingefärbten Kalk-Natron-Glas. Die Innenscheibe 1b weist eine Dicke von 1,6 mm auf und besteht aus einem klaren Kalk-Natron-Glas. Die Windschutzscheibe 1 hat eine in Einbaulage dem Dach zugewandte Oberkante D und eine in Einbaulage dem Motorraum zugewandte Unterkante M.

Die Windschutzscheibe ist in einem Bereich oberhalb des zentralen Sichtbereichs B (wie in ECE-R43 definiert) mit einer elektrisch steuerbaren Sonnenblende S ausgestattet. Die Sonnenblende S ist durch eine kommerzielle erhältliche PDLC-Mehrschichtfolie als Funktionselement 4 gebildet, die in die Zwischenschicht 3 eingelagert ist. Die Höhe der Sonnenblende beträgt beispielsweise 21 cm.

Die Zwischenschicht 3 umfasst insgesamt drei thermoplastische Schichten 3a, 3b, 3c, die jeweils durch eine thermoplastische Folie mit einer Dicke von 0,38 mm aus PVB ausgebildet sind. Die erste thermoplastische Schicht 3a ist mit der Außenscheibe 1a verbunden, die zweite thermoplastische Schicht 3b mit der Innenscheibe 1b. Die dazwischenliegende dritte thermoplastische Schicht 3c weist einen Ausschnitt auf, in welchen die zugeschnittene PDLC-Mehrschichtfolie im Wesentlichen passgenau, das heißt an allen Seiten etwa bündig, eingelegt ist. Die dritte thermoplastische Schicht 3c bildet also gleichsam eine Art Passepartout für das etwa 0,4 mm dicke Funktionselement 4, welches somit rundum in thermoplastisches Material eingekapselt und dadurch geschützt ist.

Die erste thermoplastische Schicht 3a weist einen getönten Bereich 3a' auf, der zwischen dem Funktionselement 4 und der Außenscheibe 1a angeordnet ist. Die Lichttransmission der Windschutzscheibe wird dadurch im Bereich der Sonnenblende 4 zusätzlich herabgesetzt und das milchige Aussehen des PDLC-Funktionselements 4 im diffusiven Zustand abgemildert. Die Ästhetik der Windschutzscheibe wird dadurch deutlich ansprechender gestaltet. Die erste thermoplastische Schicht 3a weist im Bereich 3a' beispielsweise eine durchschnittliche Lichttransmission von 30% auf, womit gute Ergebnisse erzielt werden. Der Bereich 3a' kann homogen getönt sein. Oft ist es jedoch optisch ansprechender, wenn die Tönung in Richtung der Unterkante des Funktionselements 4 geringer wird, so dass der getönte und der ungetönte Bereich fließend ineinander übergehen. Im dargestellten Fall sind die Unterkanten des getönten Bereichs 3a' und des PDLC-Funktionselements 4 bündig angeordnet. Dies ist aber nicht notwendigerweise der Fall. Es ist ebenso möglich, dass der getönte Bereich 3a' über das Funktionselement 4 übersteht oder dass umgekehrt das Funktionselement 4 über den getönten Bereich 3a' übersteht.

Das steuerbare Funktionselement 4 ist eine Mehrschichtfolie, bestehend aus einer aktiven Schicht 5 zwischen zwei Flächenelektroden 8, 9 und zwei Trägerfolien 6, 7. Die aktive Schicht 5 enthält eine Polymermatrix mit darin dispergierten Flüssigkristallen, die sich in Abhängigkeit der an die Flächenelektroden angelegten elektrischen Spannung ausrichten, wodurch die optischen Eigenschaften geregelt werden können. Die Trägerfolien 6, 7 bestehen aus PET und weisen eine Dicke von beispielsweise ca. 0,2 mm auf. Die Trägerfolien 6, 7 sind mit einer zur aktiven Schicht 5 weisenden Beschichtung aus ITO mit einer Dicke von etwa 100 nm versehen, welche die Flächenelektroden 8, 9 ausbilden. Die Flächenelektroden 8, 9 sind über nicht dargestellte Sammelleiter (beispielweise ausgebildet durch einen silberhaltigen Siebdruck) und nicht dargestellte Verbindungskabel mit der Bordelektrik verbindbar.

Die Windschutzscheibe weist, wie üblich, einen umlaufenden peripheren Abdeckdruck 10 auf, der durch eine opake Emaille auf den innenraumseitigen Oberflächen (in Einbaulage dem Innenraum des Fahrzeugs zugewandt) der Außenscheibe 1a und der Innenscheibe 1b ausgebildet ist. Der Abstand des Funktionselements 4 zur Oberkante D und den Seitenkanten der Windschutzscheibe ist kleiner als die Breite des Abdeckdrucks 10, so dass die Seitenkanten des Funktionselements 4 - mit Ausnahme der zum zentralen Sichtfeld B weisenden Seitenkante - durch den Abdeckdruck 10 verdeckt sind. Auch die nicht dargestellten elektrischen Anschlüsse werden sinnvollerweise im Bereich des Abdeckdrucks 10 angebracht und somit versteckt.

Nahe der Oberkante D der Windschutzscheibe 1 ist, wie ausschließlich in Fig. 1 zu erkennen, eine in der Draufsicht rechteckige und sehr dünne Batterie 11 vom LCB-Typ an der Oberkante der Sonnenblende S und im oberen Bereich des peripheren Abdeckdrucks 10 platziert. Die Batterie 11 ist in weiter unten genauer beschriebener Weise mit der Sonnenblende S elektrisch verbunden und stellt eine Notstromversorgung mit definierten Funktionen dar. Die elektrische Verbindung zur Sonnenblende S ist über einen (in Fig. 1 nicht dargestellten) Schalter realisiert.

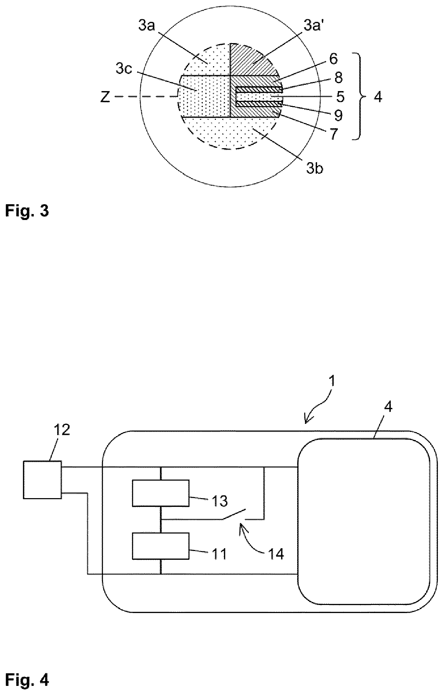

Fig. 4 zeigt skizzenartig eine Verglasungseinheit 1 mit einem eingefügten PDLC-Funktionselement 4, welches über eine externe, beispielsweise im Instrumententräger oder Dachbereich eines PKWs angeordnete Ansteuereinheit 12 angesteuert wird. Die Art und Weise der Ansteuerung eines in eine Verglasungseinheit integrierten PDLC-Elementes und der zugehörige Aufbau der Ansteuerschaltung sind dem Fachmann an sich bekannt und für die Ausführung der vorliegenden Erfindung nicht erheblich, so dass die Ansteuereinheit 12 hier nicht weiter beschrieben wird. Als Notstromversorgung ist dem PDLC-Element 4 eine Batterie 11 vom LCB-Typ zugeordnet, welche über eine Aufladesteuereinheit 13 durch die Ansteuereinheit 12 aufladbar ist. Es wird darauf hingewiesen, dass die Batterie 11 nicht notwendigerweise vom LCB-Typ sein muss, sofern ihre geometrische Konfiguration (insbesondere maximale Dicke) ein Einfügen in eine Verglasungseinheit (Verbundscheibe) des weiter oben ausführlich beschriebenen Typs ermöglicht. Grundsätzlich ist auch der Einsatz einer nicht-wiederaufladbaren Batterie mit ausreichender Lebensdauer im Rahmen der Erfindung möglich. Die Batterie 11 ist über einen Reed-Schalter 14 mit dem PDLC-Element 4 verbunden, so dass ein durch Unterbrechung der Verbindung zwischen dem PDLC-Element 4 und der Ansteuereinheit 12 opak gewordener Bereich wieder in den transparenten Zustand überführt werden kann.

### Bezugszeichen

- 1: Windschutzscheibe
- 1a: Außenscheibe
- 1b: Innenscheibe
- 3: thermoplastische Zwischenschicht
- 3a: erste Schicht der Zwischenschicht 3
- 3a': getönter Bereich der ersten Schicht 3a
- 3b: zweite Schicht der Zwischenschicht 3
- 3c: dritte Schicht der Zwischenschicht 3
- 4: Funktionselement mit elektrisch regelbaren optischen Eigenschaften
- 5: aktive Schicht des Funktionselements 4
- 6: erste Trägerfolie des Funktionselements 4
- 7: zweite Trägerfolie des Funktionselements 4
- 8, 9: Flächenelektrode des Funktionselements 4
- 10: Abdeckdruck
- 11: Batterie
- 12: Ansteuerschaltung des elektrooptischen Funktionselementes
- 13: Aufladesteuerung
- 14: Reed-Schalter

- A: Haupt-Durchsichtbereich
- B: Sichtfeld
- C: elektronische Funktionseinheit
- D: Oberkante
- S: Sonnenblende

## Patentansprüche

1. Verglasungseinheit (1), die zwei Glas- oder Polykarbonatscheiben (1a, 1b) und mindestens eine zwischen diese eingeklebte Polymerfolie oder ein FolienLaminat (3) und eine zwischen den Scheiben (1a, 1b) angeordnete elektronische Funktionseinheit (4, C) aufweist, wobei zwischen den Scheiben (1a, 1b) und mit elektrischer Verbindung zur elektronischen Funktionseinheit (4, C) zur mindestens teilweisen und mindestens temporären Stromversorgung derselben eine Batterie (11) eingefügt ist, deren Dicke höchstens gleich der Dicke der Polymerfolie oder des Folien-Laminats (3) ist, wobei die elektronische Funktionseinheit (4, C) eine solche ist, die mindestens einen Bereich (S) der Verglasungseinheit (1) von einem transparenten in einen opaken Zustand und umgekehrt schaltet und wobei die Batterie (11) derart konfiguriert und über einen auf eine Unterbrechung der Verbindung zwischen der elektronischen Funktionseinheit (4, C) und einer Ansteuereinheit (12) derselben ansprechenden Schalter (14) mit der elektronischen Funktionseinheit (4, C) verbunden ist, dass sie im Ein-Zustand des Schalters (14) den durch die elektronische Funktionseinheit (4, C) beeinflussten Bereich der Verglasungseinheit (1) transparent macht.

2. Verglasungseinheit (1) nach Anspruch 1, wobei die Batterie (11) eine Lithium-Feststoffbatterie, LCB, ist.

3. Verglasungseinheit (1) nach Anspruch 1 oder 2, wobei der Schalter (14) ein Reed-Schalter ist.

4. Verglasungseinheit (1) nach einem der vorangehenden Ansprüche, wobei die Dicke der Polymerfolie oder des Folien-Laminats (3) sowie der elektronischen Funktionseinheit (4, C) und der Batterie (11) kleiner als 1,2 mm ist, insbesondere im Bereich zwischen 0,5 mm und 1,0 mm liegt.

5. Verglasungseinheit (1) nach einem der vorangehenden Ansprüche, wobei die elektronische Funktionseinheit (4, C) als PDLC-Einheit, insbesondere mit Sonnenblenden-Funktion, ausgebildet ist.

6. Verglasungseinheit (1) nach einem der vorangehenden Ansprüche, ausgeführt als Frontscheibe (1) oder Heckscheibe oder Dachverglasung oder Seitenscheibe eines Fahrzeugs, insbesondere PKW.

7. Verglasungseinheit (1) nach Anspruch 6, wobei die elektronische Funktionseinheit (4, C) als vollständig vorgefertigtes Funktionsmodul zusammen mit der Batterie (11) in einem Ausschnitt der Polymerfolie oder des Folien-Laminats (3) eingefügt ist.

8. Verglasungseinheit (1) nach Anspruch 6 oder 7, wobei die Batterie (11) in der Frontscheibe oder Heckscheibe oder Dachverglasung an oder nahe einer Kante (D) derselben platziert ist.

9. Fahrzeug, insbesondere PKW, mit mindestens einer Verglasungseinheit (1) nach einem der vorangehenden Ansprüche.

## Claims

1. A glazing unit (1) comprising two glass or polycarbonate panes (1a, 1b) and at least one polymer film or film laminate (3) bonded between them and an electronic functional unit (4, C) arranged between the panes (1a, 1b), wherein a battery (11) is inserted between the panes (1a, 1b) and with electrical connection to the electronic functional unit (4, C) for at least partial and at least temporary power supply thereto, the thickness of which is at most equal to the thickness of the polymer film or the film laminate (3), wherein the electronic functional unit (4, C) is one which switches at least one region (S) of the glazing unit (1) from a transparent to an opaque state and vice versa, and wherein the battery (11) is configured and connected to the electronic functional unit (4, C) via a switch (14) responding to an interruption of the connection between the electronic functional unit (4, C) and a control unit (12) thereof in such a way that, in the on-state of the switch (14), it makes the region of the glazing unit (1) influenced by the electronic functional unit (4, C) transparent.

2. Glazing unit (1) according to claim 1, wherein the battery (11) is a lithium solid-state battery, LCB.

3. Glazing unit (1) according to claim 1 or 2, wherein the switch (14) is a reed switch.

4. Glazing unit (1) according to one of the preceding claims, wherein the thickness of the polymer film or the film laminate (3) as well as the electronic functional unit (4, C) and the battery (11) is less than 1.2 mm, in particular in the range between 0.5 mm and 1.0 mm.

5. Glazing unit (1) according to one of the preceding claims, wherein the electronic functional unit (4, C) is designed as a PDLC unit, in particular with a sun visor function.

6. Glazing unit (1) according to one of the preceding claims, designed as a windshield (1) or rear window or roof glazing or side window of a vehicle, in particular a passenger car.

7. Glazing unit (1) according to claim 6, wherein the electronic functional unit (4, C) is inserted as a completely prefabricated functional module together with the battery (11) in a cut-out of the polymer film or the film laminate (3).

8. Glazing unit (1) according to claim 6 or 7, wherein the battery (11) is placed in the windshield or rear window or roof glazing at or near an edge (D) thereof.

9. Vehicle, in particular passenger car, with at least one glazing unit (1) according to one of the preceding claims.

## Revendications

1. Vitrage (1) comprenant deux vitres en verre ou en polycarbonate (1a, 1b) et au moins un film polymère ou un film stratifié (3) collé entre elles et une unité fonctionnelle électronique (4, C) disposée entre les vitres (1a, 1b), dans lequel une batterie (11) est insérée entre les vitres (1a, 1b) et reliée électriquement à l'unité fonctionnelle électronique (4, C) pour l'alimenter au moins partiellement et au moins temporairement, dont l'épaisseur est au plus égale à l'épaisseur du film polymère ou du film stratifié (3), dans lequel l'unité fonctionnelle électronique (4, C) est une unité qui fait passer au moins une zone (S) du vitrage (1) d'un état transparent à un état opaque et vice versa, et dans laquelle la batterie (11) est configurée et connectée à l'unité fonctionnelle électronique (4, C) par l'intermédiaire d'un interrupteur (14) réagissant à une interruption de la connexion entre l'unité fonctionnelle électronique (4, C) et une unité de commande (12) de celle-ci de telle sorte que, à l'état activé du interrupteur (14), il rende transparente la zone du vitrage (1) influencée par l'unité fonctionnelle électronique (4, C).

2. Vitrage (1) selon la revendication 1, dans lequel la batterie (11) est une batterie au lithium à l'état solide, LCB.

3. Vitrage (1) selon la revendication 1 ou 2, dans lequel l'interrupteur (14) est un interrupteur à lames.

4. Vitrage (1) selon l'une des revendications précédentes, dans lequel l'épaisseur du film polymère ou du film stratifié (3) ainsi que de l'unité fonctionnelle électronique (4, C) et de la batterie (11) est inférieure à 1,2 mm, en particulier comprise entre 0,5 mm et 1,0 mm.

5. Vitrage (1) selon l'une des revendications précédentes, dans lequel l'unité fonctionnelle électronique (4, C) est conçue comme une unité PDLC, en particulier avec une fonction de pare-soleil.

6. Vitrage (1) selon l'une des revendications précédentes, conçu comme un pare-brise (1) ou une lunette arrière ou un vitrage de toit ou une vitre latérale d'un véhicule, en particulier d'une voiture particulière.

7. Vitrage (1) selon la revendication 6, dans lequel l'unité fonctionnelle électronique (4, C) est insérée en tant que module fonctionnel entièrement préfabriqué avec la batterie (11) dans une découpe du film polymère ou du film stratifié (3).

8. Vitrage (1) selon la revendication 6 ou 7, dans lequel la batterie (11) est placée dans le pare-brise, la lunette arrière ou le vitrage du toit, au niveau ou à proximité d'un bord (D) de celui-ci.

9. Véhicule, en particulier voiture particulière, avec au moins un vitrage (1) selon l'une des revendications précédentes.
